# EUROPEAN PATENT SPECIFICATION

(11) **EP 0 335 269 B1**
(45) Date of publication and mention of the grant of the patent: **05.10.1994**
(21) Application number: 89105271.4
(22) Date of filing: 23.03.1989
(51) Int. Cl.: H02P 7/62

(54) **Magnetic flux operation method for induction motor**
Magnetfluss-Betriebsverfahren für einen Induktionsmotor
Méthode de fonctionnement par flux magnétique pour un moteur à induction

(30) Priority: 26.03.1988 JP 72572/88
(43) Date of publication of application: 04.10.1989
(73) Proprietor: KABUSHIKI KAISHA YASKAWA DENKI SEISAKUSHO, Kitakyushu-Shi Fukuoka-Ken (JP)
(72) Inventor: Watanabe, Eiji Yukuhashi Plant K.K. Yaskawa, Yukuhashi-shi Fukuoka 824 (JP); Ohtani, Tsugutoshi Yukuhashi Plant K.K. Yaskawa, Yukuhashi-shi Fukuoka 824 (JP)
(74) Representative: Müller-Boré & Partner Patentanwälte

(56) References cited:
- EP-A- 0 175 154
- EP-A- 0 179 356
- US-A- 4 431 957
- CONF. RECORD OF THE 1986 IEEE INDUSTRY APPLICATIONS SOCIETY ANNUAL MEETING October 1986, US, page 203 - 209; TSUGUTOSHI OHTANI: "A NEW METHOD OF TORQUE CONTROL FREE FROM MOTOR PARAMETER VARIATION IN INDUCTION MOTOR DRIVES"
- PATENT ABSTRACTS OF JAPAN vol. 7, no. 54 (P-180)(1199) 04 March 1983,& JP-A-57 201870 (YASUKAWA DENKI SEISAKUSHO K.K.) 10 December 1982,
- PATENT ABSTRACTS OF JAPAN vol. 10, no. 263 (E-435)(2319) 09 September 1986,& JP-A-61 088793 (YASKAWA ELECTRIC MFG CO LTD) 07 May 1986,

## Description

### Magnetic Flux Control Device for Induction Motor

### Technical Field

The present invention relates to an induction motor magnetic flux control device according to the preamble of claim 1, for use in carrying out a vector control by detecting the torque current component from the voltage and current applied to the motor. Such a control device is known e.g. from the Conference record of the 1986 IEEE industry applications society annual meeting, Oct. 1986, S. 203 - 209

From the JP-A- 61088793 there is known a field controller for an induction motor

Conventionally, there has been known a method of operating the secondary linkage magnetic flux of an induction motor by using a primary delay circuit with the voltage and current on the motor and a magnetic flux command value as inputs.

For example, in the case of the Japanese Laid-Open Patent Publication No.57-201870 previously disclosed by the present applicant, a method has been proposed in which a secondary induced voltage is obtained by reducing the impedance voltage of an induction motor from the terminal voltage thereof, a voltage obtained by adding to the secondary induced voltage a voltage corresponding to the excitation command current operated by an excitation command is derived and the derived voltage is integrated by a primary delay integration.

However, the above conventional method has had the disadvantage that the effect of the parameters of the motor on the magnetic flux operation value, especially that of the primary resistance varying depending on temperatures, becomes large at low-frequencies.

Accordingly, an object of the present invention is to reduce the increase in phase error with respect to the magnetic flux operation characteristics of an induction motor by re-investigating the characteristics of magnetic flux operation value on the basis of evaluation of a torque current feedback or magnetic flux orientation type torque control employed for carrying out a vector control.

In accordance with the present invention this is achieved by a control device according to claim 1. The time constant of the primary delay circuit is set equal to that of the secondary circuit of the motor.

### Brief Description of the Drawings

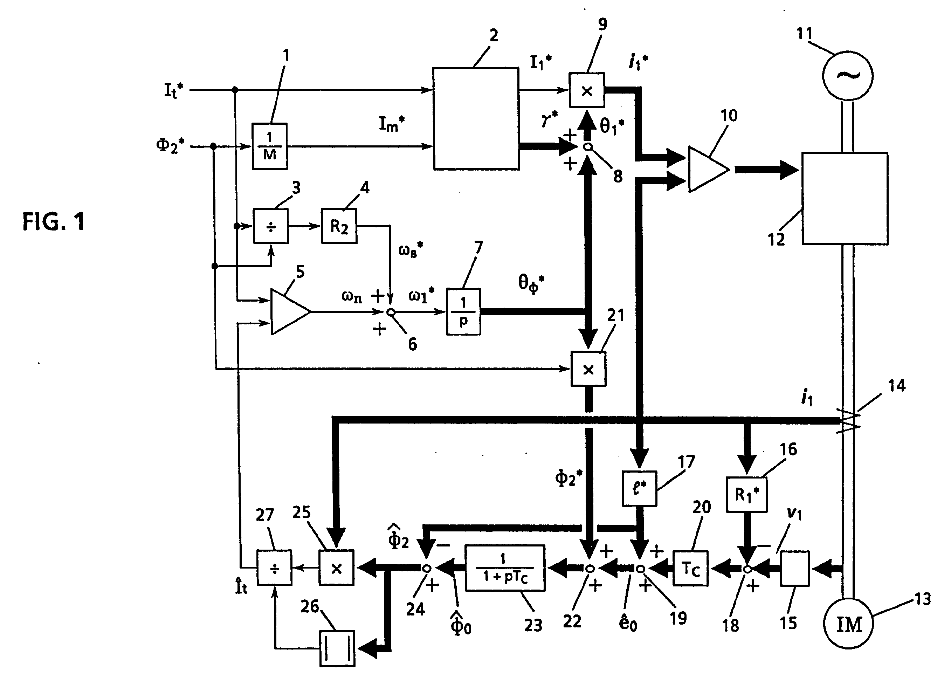

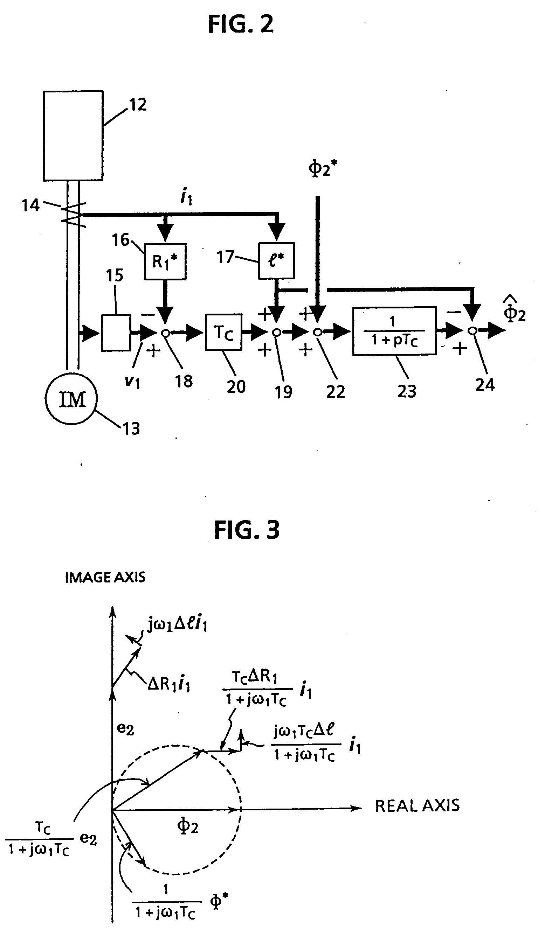

Fig. 1 is a block diagram of one embodiment of the present invention, Fig. 2 is a block diagram of an example of a magnetic flux operation circuit and Fig. 3 is a secondary flux vector scheme.

One of the characteristics of the magnetic flux vector first required even for the torque current feedback and magnetic flux orientation type vector controls is the coincidence in phase between the actual secondary linkage magnetic flux and its operation value and the next one is the coincidence among the magnetic flux amplitudes.

Therefore, in the present invention, effort has been exercised to reduce the phase error of the magnetic flux operation value at low frequencies, particularly by taking notice of the characteristics of magnetic flux operation value in a motor constrained state brought about at a critical low frequency. For example, the torque current It in the torque current feedback type vector control may be operated as follows:${\text{I}}_{\text{t}} \text{=(} \text{i} \text{₁×Φ₂)/|Φ₂|}$
Wherein
- *i*₁:: primary current vector
- Φ₂:: secondary linkage magnetic flux vector
- |Φ₂|:: amplitude of secondary linkage magnetic flux vector

As will be seen from the equation (1), the primary current *i*₁ can be directly detected and the magnetic flux can be expressed by Φ₂/|Φ₂| showing favorableness of the phase characteristic of the unit vector.

In the present invention, the characteristics of the operation magnetic flux vector has been investigated especially at low-frequencies at which the operation error increases, so as to improve them and particularly, an attempt has been made to reduce phase error in a motor constrained state.

Fig. 2 is a block diagram of a magnetic flux operation circuit, wherein reference numeral 12 designates an inverter and reference numeral 13 designates an induction motor. The current i₁ flowing through the induction motor 13 is detected by a current detector 14 and the voltage v₁ is detected by a voltage detector 15. Reference numerals 16, 17 and 20 designate constant devices, reference numerals 18 and 24 designate subtracters, reference numerals 19 and 22 designate adders and reference numeral 23 designates a primary delay circuit. In the block diagram of Fig. 2, a secondary linkage magnetic flux Φ̂₂ is operated by the following equation: 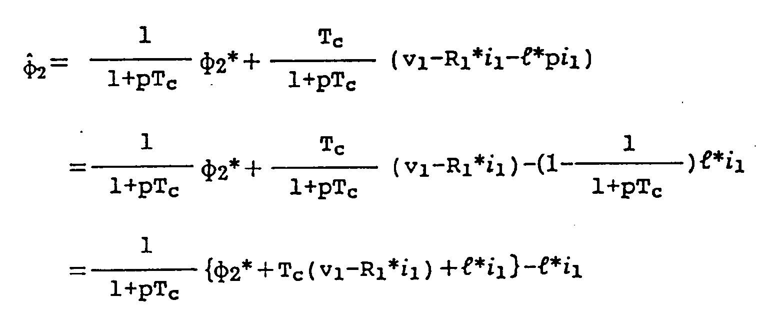
provided that p is a differential operator.

In a steady-state, the operation error in the above equation is expressed by the following equation (2) provided that p = jω₁.$\hat{\text{Φ}} \text{₂=} \frac{\text{1}}{{\text{1+jω₁T}}_{\text{c}}} \text{Φ₂*+} \frac{{\text{T}}_{\text{c}}}{{\text{1+jω₁T}}_{\text{c}}} \text{(v₁-R₁*} \text{i} \text{₁-jω₁ℓ*} \text{i} \text{₁)}$
and if e₂=v₁-R₁*i*₁-jω₁ℓ*i*₁, ΔR₁=R₁-R₁* and Δℓ=ℓ-ℓ* then 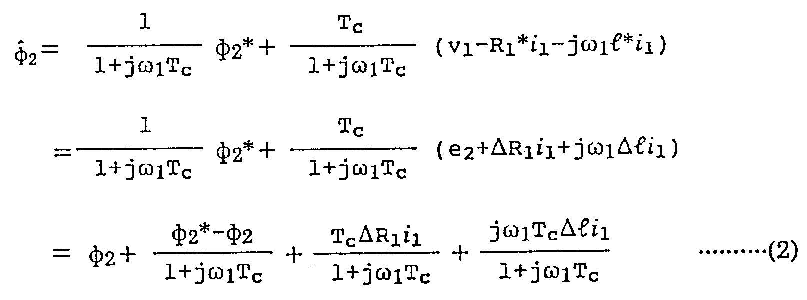
provided that
- R₁ :: actual value of the primary resistance
- R₁* :: set value of the primary resistance
- ℓ :: actual value of leakage inductance
- ℓ* :: set value of leakage inductance
- T_{c} :: primary delay constant
- Φ₂*:: magnetic flux command (vector quantity)
- Φ₂ :: actual secondary linkage magnetic flux (vector quantity)
- Φ̂₂:: secondary linkage magnetic flux operation value (vector quantity)
- v₁:: primary voltage (vector quantity)
- e₂:: nternally induced voltage (vector quantity)
- ω₁ :: angular frequency (=2πf₁)
- f₁ :: primary frequency
- j :: symbol of imaginary number

That is, the equation (2) includes a first term showing the actual value of secondary magnetic flux, a second term showing the difference between the command value and actual value of secondary magnetic flux, a third term showing the error resulting from the set value error of primary resistance and a fourth term resulting from the set value error of leakage inductance.

In Fig. 3, a vector diagram of the secondary magnetic flux operated by the equation (2) is shown. In a motor constrained state, when the vector controlling conditions are taken into consideration, the primary current in the equation (2) includes an exciting current and torque current which can be expressed by the following equation (4) and the relationship between the two currents can be expressed by the following equation (5):$\text{i} \text{₁=} {\text{i}}_{\text{m}} \text{+} {\text{i}}_{\text{t}} \text{=(1+j} \frac{{\text{I}}_{\text{t}}}{{\text{I}}_{\text{m}}} \text{)} {\text{i}}_{\text{m}}$${\text{I}}_{\text{t}} {\text{/I}}_{\text{m}} \text{=ω₁T₂}$
provided that:
- ω₁:: primary angular frequency
- *i*ₘ:: exciting current (vector)
- T₂ :: constant of secondary circuit of motor
- Iₘ :: exciting current (amplitude)
- Iₜ :: torque current (amplitude)

Further, in a vector controlling state, the second term of the equation (2) becomes zero so that when the equation (4) is substituted into the equation (2), the following equation (6) will result:

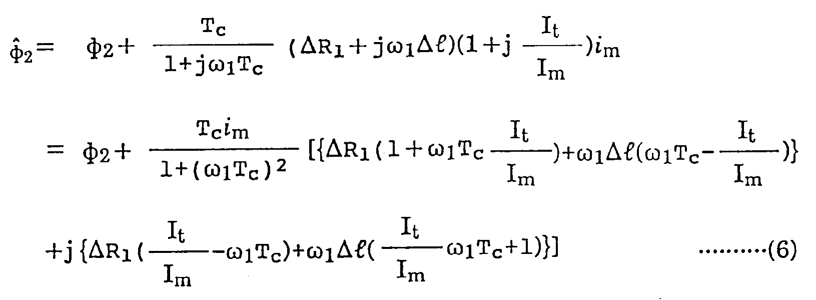

In the equation (6), if we put Φ̂₂ (same phase as Φ₂) as Φ̂₂ (re), the orthogonal component as Φ̂₂ (im), and the phase difference between Φ₂ and Φ̂₂ as δ, then they can be expressed by the following equation (7), (8) and (9):$\hat{\text{Φ}} \text{₂(re)= Φ₂[1 +} \frac{{\text{T}}_{\text{c}}}{\text{M}} \text{·} \frac{\text{1}}{{\text{1+(ω₁T}}_{\text{c}} \text{)²}} {\text{{ΔR₁(1+ω₁T}}_{\text{c}} \frac{{\text{I}}_{\text{t}}}{{\text{I}}_{\text{m}}} {\text{) +ω₁Δℓ(ω₁T}}_{\text{c}} \text{-} \frac{{\text{I}}_{\text{t}}}{{\text{I}}_{\text{m}}} \text{)}]}$$\hat{\text{Φ}} \text{₂(im)= Φ₂[} \frac{{\text{T}}_{\text{c}}}{\text{M}} \text{·} \frac{\text{1}}{{\text{1+(ω₁T}}_{\text{c}} \text{)²}} \text{{ΔR₁ (} \frac{{\text{I}}_{\text{t}}}{{\text{I}}_{\text{m}}} {\text{-ω₁T}}_{\text{c}} \text{) +ω₁Δℓ(} \frac{{\text{I}}_{\text{t}}}{{\text{I}}_{\text{m}}} {\text{ω₁T}}_{\text{c}} \text{+1)}]}$$\text{δ=tan⁻¹{} \hat{\text{Φ}} \text{₂(im)/} \hat{\text{Φ}} \text{₂(re)}}$

Now, assuming that the time constant of the primary delay circuit is equal to that of the secondary circuit of the motor (that is, T_{c} = T₂), the equations (8) and (9) will be modified to the following equations (10) and (11) from ω₁T₂ = ω₁T_{c} = Iₜ/Iₘ.$\hat{\text{Φ}} \text{₂(re)= Φ₂[1 +} \frac{{\text{T}}_{\text{c}}}{\text{M}} \text{ΔR₁]}$$\hat{\text{Φ}} \text{₂(im)= Φ₂[} \frac{{\text{T}}_{\text{c}}}{\text{M}} \text{ω₁Δℓ]}$

As a result, the term Φ̂₂ (im) of the equation (9) does not include any component regarding the primary resistance error and therefore no phase difference resulting from the primary resistance error takes place. Further, when we operate the torque current by using the secondary magnetic flux operation value obtained by the equations (10) and (11), the following equation (14) will be obtained from the following equations (12) and (13): 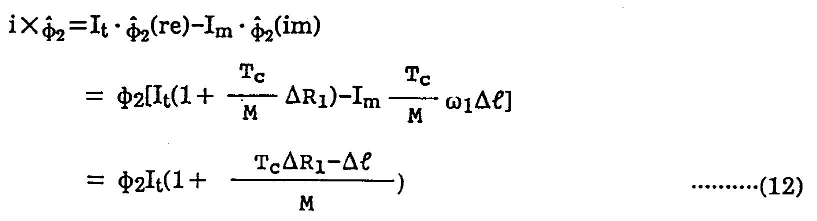 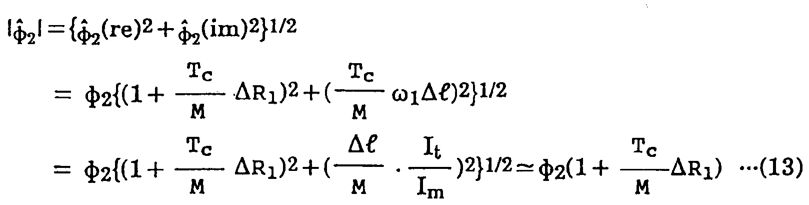
wherein$\text{(1+} \frac{{\text{T}}_{\text{c}} \text{ΔR₁}}{\text{M}} \text{)»} \frac{\text{Δℓ}}{{\text{M I}}_{\text{m}}}$${\hat{\text{I}}}_{\text{t}} \text{=} \text{i} \text{₁×} \hat{\text{Φ}} \text{₂/|} \hat{\text{Φ}} {\text{₂|=I}}_{\text{t}} \text{(1-} \frac{\text{Δℓ}}{{\text{M+T}}_{\text{c}} \text{ΔR₁}} {\text{) ≃I}}_{\text{t}}$
wherein
Δℓ « (M+T_{c}ΔR₁)
Iₜ : actual value of torque current
Îₜ : operation value of torque current
and accordingly, it will be seen from the equation (14) that the operation value of the torque current approximates to its true value.

The present invention will now be concretely described by referring to an embodiment shown in the drawings.

Fig. 1 is a block diagram showing an example of how the magnetic flux operation method is performed, wherein reference numeral 11 designates a power supply source, reference numeral 12 designates an inverter, reference numeral 13 designates an induction motor, reference numeral 14 designates a current detector and reference numeral 15 designates a voltage detector.

In Fig. 1, a vector computing element 2 operates on the following equations (15) and (16) according to an exciting current command value Iₘ* computed by multiplying a set magnetic flux command value Φ₂* by a 1/M constant 1, and a torque current command value Iₜ* and outputs a primary current command value I₁* and a phase γ*.$\text{I₁*=} \sqrt{{\text{I}}_{\text{m}} {\text{*²+I}}_{\text{t}} \text{*²}}$${\text{γ*=tan⁻¹(I}}_{\text{t}} {\text{*/I}}_{\text{m}} \text{*)}$

A multiplier 9 multiplies a phase ϑ₁* of the primary current command outputted from a multiplier 8 by a primary current command value I₁ and outputs a primary current command vector *i*₁*.

A current controller 10 controls the inverter 12 according to the difference between a primary current command vector *i*₁* and a primary current *i*₁ detected through the current detector 14 and supplies to the motor a current in compliance with the primary current command vector.

A frequency controller 5 outputs a frequency ωn according to the difference between the torque current command value Iₜ* and a torque current operation value Iₜ.

An integrator 7 integrates the sum of a frequency ωₙ and a frequency command value ωₛ* outputted from an adder 6, that is, a magnetic flux frequency ω₁*, and outputs a magnetic flux command phase ϑ_{Φ}*.

Adders 18 and 19 operate the following equation (17) on the basis of a motor terminal voltage v₁ detected by the voltage detector 15 and output an induced voltage ê₀.$\hat{\text{e}} {\text{₀=T}}_{\text{c}} \text{(v₁-R₁*} \text{i} \text{₁)-ℓ*} \text{i} \text{₁}$

A primary delay circuit 23 operates the following equation (18) from a magnetic flux command vector Φ₂* outputted from an multiplier 21 and the induced voltage ê₀ and outputs a magnetic flux Φ̂₀.$\hat{\text{Φ}} \text{₀=} \frac{\text{1}}{{\text{1+pT}}_{\text{c}}} \text{(} \hat{\text{e}} \text{₀+Φ₂*)}$

The computed value of Φ̂₀ is removed of a leakage reactance drop component by a deductor 24 which latter then outputs a secondary magnetic flux Φ̂₂.

Then the torque current Îₜ is obtained by operating the equation (14) with a vector integrator 25, an amplitude computation element 26 and a divider 27 on the basis of the secondary magnetic flux Φ̂₂ and primary current *i*₁.

Thus, in the above matter, it is possible to approximate the operation value of torque curent Îₜ by the true value.

As described above, it is possible with the present invention to minimize the phase error with respect to the true secondary magnetic flux included in the secondary magnetic flux value in such a manner that the internal induced voltage obtained by subtracting from the terminal voltage of the motor the primary resistance drop component and the leakage reactance drop component and the magnetic flux command are synthesized to provide an output and by this output, the secondary magnetic flux is operated through the primary delay circuit with a time constant equal to that of the secondary circuit of the motor.

Therefore, it is possible to operate an accurate torque current on the basis of the secondary magnetic operation value and primary current irrespective of the errors of primary resistance and leakage reactance.

Further, by using the above-mentioned torque current operation value, a vector control device having a favorable vector control characteristic covering a wide range of speed can be constructed.

The present invention can be utilized in such fields as tension control for paper, film, metal strip or fiber and typically and constant output power control where a favorable torque control characteristic over a wide range of speed is required.

## Claims

1. An induction motor magnetic flux control device for controlling an induction motor (13) having a secondary circuit time constant (T_{c}), comprising:
a current detector (14), and a voltage detector (15) for detecting current (i₁) flowing in and voltage (V₁) applied to an induction motor (13), respectively;
a first constant device (16) connected to multiply the detected current value (i₁) of said current detector by a primary resistance value (R₁*);
a second constant device (17) connected to multiply the detected current value (i₁) of said current detector by a leakage reactance value (1*);
a first subtracter (18) connected to subtract the output value of said first constant device (16) from the detected voltage value of said voltage detector (15);
characterized by
a third constant device (20) connected to multiply the output value of said first subtracter (18) by the secondary circuit time constant (T_{c}) of said induction motor (15);
a first adder (19) connected to add the output value of said second constant device (17) to the output value of said third constant device (20) to obtain an induced voltage value;
a second adder (22) connected to add a magnetic flux command value (φ₂*) to the output value of said first adder (19);
a primary delay circuit (23) connected to receive the output value of said second adder (22) as an input and to output a magnetic flux value, said primary delay circuit having a primary delay time constant (T_{c}); and
a second subtracter (24) connected to subtract the output value of said second constant device (17) from the output value of said primary delay circuit (23) to thereby obtain a secondary magnetic flux value (φ̂₂).

2. An induction motor magnetic flux control device according to claim 1, comprising a vector control device (2) for producing a torque current component as a function of the secondary magnetic flux (φ̂₂) produced by the control device, and wherein the vector control device (2) is responsive to said torque component current, a magnetic flux command and a torque current command.

## Patentansprüche

1. Induktionsmotor-Magnetflußsteuerungsvorrichtung zur Steuerung eines Induktionsmotors (13), welcher eine sekundäre Schaltungszeitkonstante (T_{c}) aufweist mit:
einer Stromnachweiseinrichtung (14), und einer Spannungsnachweiseinrichtung (15), um den einfließenden Strom (i₁) bzw. die an einem Induktionsmotor (13) angelegte Spannung (V₁) nachzuweisen;
einer ersten Konstanteneinrichtung (16), die angeschlossen ist, um den erfaßten Stromwert (i₁) der Stromnachweiseinrichtung mit einem Primärwiderstandswert (R₁*) zu multiplizieren;
einer zweiten Konstanteneinrichtung (17), die angeschlossen ist, um den erfaßten Stromwert (i₁) der Stromnachweiseinrichtung mit einem Streureaktanzwert (I*) zu multiplizieren;
einer ersten Subtraktionseinrichtung (18), die angeschlossen ist, um den Ausgangswert der ersten Konstanteneinrichtung (16) von dem erfaßten Spannungswert von der Spannungsnachweiseinrichtung (15) zu subtrahieren;
gekennzeichnet durch
eine dritte Konstanteneinrichtung (20), die angeschlossen ist, um den Ausgangswert der ersten Subtraktionseinrichtung (18) mit der sekundären Schaltungszeitkonstante (T_{c}) des Induktionsmotors (13) zu multiplizieren;
eine erste Additionseinrichtung (19), die angeschlossen ist, um den Ausgangswert der zweiten Konstanteneinrichtung (17) mit dem Ausgangswert der dritten Konstanteneinrichtung (20) zu addieren, um einen Induktionsspannungswert zu erhalten;
eine zweite Additionseinrichtung (22), die angeschlossen ist, um einen Magnetflußsteuerwert (φ₂*) zu dem Ausgangswert der ersten Additionseinrichtung (19) zu addieren;
eine primäre Verzögerungsschaltung (23), die angeschlossen ist, um den Ausgangswert der zweiten Additionseinrichtung (22) als einen Eingang zu erhalten und einen Magnetflußwert auszugeben, wobei die primäre Verzögerungsschaltung eine primäre Verzögerungszeitkonstante (T_{c}) aufweist; und
eine zweite Subtraktionseinrichtung (24), die angeschlossen ist, um den Ausgabewert der zweiten Konstanteneinrichtung (17) von dem Ausgabewert der primären Verzögerungsschaltung (23) zu subtrahieren, um dadurch einen sekundären Magnetflußwert (φ₂) zu bekommen.

2. Induktionsmotor-Magnetflußsteuerungsvorrichtung gemäß Anspruch 1, welche eine Vektorsteuerungseinrichtung (2) aufweist, um einen Drehmomentkomponentenstrom zu erzeugen als eine Funktion von dem durch die Steuervorrichtung erzeugten Sekundärmagnetfluß (φ₂), und wobei die Vektorsteuereinrichtung (2) auf den Drehmomentkomponentenstrom, eine Magnetflußsteuerung und eine Drehmomentstromsteuerung anspricht.

## Revendications

1. Dispositif de commande de flux magnétique de moteur à induction pour commander un moteur à induction (13) ayant une constante de temps de circuit secondaire (T_{c}), comprenant :
un détecteur d'intensité (14), et un détecteur de tension (15) pour détecter, respectivement, l'intensité (i₁) s'écoulant dans un moteur à induction (13) et la tension (V₁) appliquée à celui-ci ;
un premier dispositif à constante (16) connecté pour multiplier la valeur d'intensité détectée (i₁) dudit détecteur de courant par une valeur de résistance de primaire (R₁*) ;
un deuxième dispositif à constante (17) connecté pour multiplier la valeur d'intensité détectée (i₁) dudit détecteur de courant par une valeur de réactance de fuite (1*) ;
un premier soustracteur (18) connecté pour soustraire la valeur de sortie dudit premier dispositif à constante (16) de la valeur de tension détectée dudit détecteur de tension (15) ;
caractérisé par :
un troisième dispositif à constante (20) connecté pour multiplier la valeur de sortie dudit premier soustracteur (18) par la constante de temps de circuit secondaire (T_{c}) dudit moteur à induction (13) ;
un premier additionneur (19) connecté pour additionner la valeur de sortie dudit deuxième dispositif à constante (17) à la valeur de sortie dudit troisième dispositif à constante (20) pour obtenir une valeur de tension induite ;
un second additionneur (22) connecté pour additionner une valeur de consigne de flux magnétique (Φ₂*) à la valeur de sortie dudit premier additionneur (19) ;
un circuit à retard de primaire (23) connecté pour recevoir, comme entrée, la valeur de sortie dudit second additionneur (22) et pour sortir une valeur de flux magnétique, ledit circuit à retard de primaire ayant une constante de temps de retard de primaire (T_{c}) ; et
un second soustracteur (24) connecté pour soustraire la valeur de sortie dudit deuxième dispositif à constante (17) de la valeur de sortie dudit circuit à retard de primaire (23) pour obtenir ainsi une valeur de flux magnétique de secondaire (Φ₂).

2. Dispositif de commande de flux magnétique de moteur à induction selon la revendication 1, comprenant un dispositif de commande vectorielle (2) pour produire une composante d'intensité de couple comme fonction du flux magnétique de secondaire (Φ₂) produit par le dispositif de commande ; et dans lequel le dispositif de commande vectorielle (2) est sensible à ladite composante d'intensité de couple, à une valeur de consigne de flux magnétique et à une valeur de consigne d'intensité de couple.
